# EUROPEAN PATENT APPLICATION

(11) **EP 4 418 786 A1**
(43) Date of publication of application: **21.08.2024**
(21) Application number: 22891745.6
(22) Date of filing: 17.10.2022
(51) Int. Cl.: H04W 72/04

(54) **DATA TRANSMISSION METHOD AND COMMUNICATION DEVICE**

(30) Priority: 10.11.2021 CN 202111327256
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); XU, Hua, Shenzhen, Guangdong 518129 (CN)
(74) Representative: Körber, Martin Hans
(86) International application number: PCT/CN2022/125666
(87) International publication number: WO 2023/082948

(57) **Abstract**

This disclosure provides a data transmission method and a communication apparatus. The method includes: A first device receives first scheduling indication information and second scheduling indication information from a second device, where the first scheduling indication information indicates a first transmission resource from the second device to the first device, and the second scheduling indication information indicates a second transmission resource from the first device to a third device. The first device receives transmission data from the second device on the first transmission resource. When the transmission data is successfully received by the first device, the first device sends the transmission data to the third device on the second transmission resource. In this manner, the first device may first receive a scheduling indication about the first transmission resource and the second transmission resource. In this case, after receiving the transmission data, the first device does not need to request a scheduling resource from the second device, but performs transmission by using the scheduled second transmission resource. In this way, signaling overheads between devices are reduced, the transmission data is sent to the third device more quickly, and a transmission delay is reduced.

## Description

This application claims priority to Chinese Patent Application No. 202111327256.X, filed with the China National Intellectual Property Administration on November 10, 2021 and entitled "DATA TRANSMISSION METHOD AND COMMUNICATION APPARATUS", which is incorporated herein by reference in its entirety.

### TECHNICAL FIELD

This disclosure relates to the communication field, and more specifically, to a data transmission method and a communication apparatus.

### BACKGROUND

In a user equipment (User Equipment, UE)-to-network relay (UE-to-Network Relay, U2N Relay) scenario, a network device may transmit data to a remote UE (Remote UE) via a relay UE (Relay UE). In this process, after receiving the data delivered by a base station to the remote UE, the relay UE needs to request, from the network device, a transmission resource that needs to be scheduled, and then the relay UE may transmit the data to the remote UE by using the transmission resource. The data waits for the to-be-scheduled transmission resource at the relay UE, causing an excessively large data transmission delay.

### SUMMARY

Embodiments of this disclosure provide a data transmission solution, to reduce a transmission delay.

According to a first aspect, a data transmission method is provided, including: A first device receives first scheduling indication information and second scheduling indication information from a second device, where the first scheduling indication information indicates a first transmission resource from the second device to the first device, and the second scheduling indication information indicates a second transmission resource from the first device to a third device. The first device receives transmission data from the second device on the first transmission resource. When successfully receiving the transmission data, the first device sends the transmission data to the third device on the second transmission resource.

In this way, the first device may first receive a scheduling indication about the first transmission resource and the second transmission resource. In this case, after receiving the transmission data, the first device does not need to request a scheduling resource from the second device, and performs transmission by using only the scheduled second transmission resource. In this way, signaling overheads between devices are reduced, the transmission data is sent to the third device more quickly, and a transmission delay is reduced.

In some embodiments of the first aspect, the method further includes: The first device receives first feedback information from the third device, where the first feedback information indicates whether the third device successfully receives the transmission data. The first device sends first joint feedback information to the second device, where the first joint feedback information includes the first feedback information and second feedback information, and the second feedback information indicates that the first device successfully receives the transmission data.

In this way, the first device may provide a joint feedback for the second device, to indicate, in the joint feedback, whether the reception of the first device is successful and whether the reception of the third device is successful. In this way, the signaling overheads are reduced.

In some embodiments of the first aspect, the first scheduling indication information and the second scheduling indication information are carried in same control signaling.

In this way, the first transmission resource and the second transmission resource may be simultaneously scheduled by using the same control signaling, so that the signaling overheads can be reduced.

In some embodiments of the first aspect, the first scheduling indication information is carried in first control signaling, the first control signaling includes a first identifier, the second scheduling indication information is carried in second control signaling, and the second control signaling includes a second identifier associated with the first identifier.

In this way, the first transmission resource and the second transmission resource are separately scheduled by using different control signaling, and the associated identifiers may indicate the resources for the transmission data. In this way, an existing control signaling format can be fully used, and a large change to a current protocol is avoided.

In some embodiments of the first aspect, the method further includes: When the transmission data is not successfully received by the first device, the first device sends second joint feedback information to the second device, where the second joint feedback information includes third feedback information and fourth feedback information, the third feedback information indicates that the first device fails to receive the transmission data, and the fourth feedback information indicates that the third device fails to receive the transmission data.

In this way, the first device may provide a joint feedback for the second device, to indicate, in the joint feedback, whether the reception of the first device is successful and whether the reception of the third device is successful. In this way, the signaling overheads are reduced.

In some embodiments of the first aspect, the method further includes: When the transmission data is not successfully received by the first device, the first device sends third feedback information to the second device, where the third feedback information indicates that the first device fails to receive the transmission data. The first device sends fourth feedback information to the second device, where the fourth feedback information indicates that the third device fails to receive the transmission data.

In some embodiments of the first aspect, the method further includes: The first device determines a destination address based on cached data of the first device, where the destination address corresponds to a destination device. The first device sends, to the destination device on the second transmission resource, data that is in the cached data and that corresponds to the destination address.

In this way, when the scheduled second transmission resource is not used by the transmission data, the second transmission resource may be further used to transmit other cached data. This can avoid a resource waste and improve resource utilization.

In some embodiments of the first aspect, types of the first device and the third device are terminal devices, and there is a PC5 interface between the first device and the third device. A type of the second device is a terminal device, and there is a PC5 interface between the first device and the second device; or a type of the second device is a network device, and there is a Uu interface between the first device and the second device.

According to a second aspect, a data transmission method is provided, including: A second device sends first scheduling indication information and second scheduling indication information to a first device, where the first scheduling indication information indicates a first transmission resource from the second device to the first device, and the second scheduling indication information indicates a second transmission resource from the first device to a third device. The second device sends transmission data to the first device on the first transmission resource, so that the first device sends the transmission data to the third device on the second transmission resource.

In some embodiments of the second aspect, the method further includes: The second device receives joint feedback information from the first device, where the joint feedback information includes first feedback information and second feedback information, the first feedback information indicates whether the third device successfully receives the transmission data, and the second feedback information indicates whether the first device successfully receives the transmission data.

In some embodiments of the second aspect, the method further includes: The second device receives third feedback information from the first device, where the third feedback information indicates that the first device fails to receive the transmission data. Optionally, the second device may further receive fourth feedback information from the first device, where the fourth feedback information indicates that the second transmission resource is used to transmit cached data of a destination address and indicates whether a destination device corresponding to the destination address successfully receives the cached data.

In some embodiments of the second aspect, the first scheduling indication information and the second scheduling indication information are carried in same control signaling.

In some embodiments of the second aspect, the first scheduling indication information is carried in first control signaling, the first control signaling includes a first identifier, the second scheduling indication information is carried in second control signaling, and the second control signaling includes a second identifier associated with the first identifier.

In some embodiments of the second aspect, types of the first device and the third device are terminal devices, and there is a PC5 interface between the first device and the third device. A type of the second device is a terminal device, and there is a PC5 interface between the first device and the second device; or a type of the second device is a network device, and there is a Uu interface between the first device and the second device.

According to a third aspect, a communication apparatus is provided, including a receiving module and a sending module. The receiving module is configured to receive first scheduling indication information and second scheduling indication information from a second device, where the first scheduling indication information indicates a first transmission resource from the second device to the communication apparatus, and the second scheduling indication information indicates a second transmission resource from the communication apparatus to a third device. The receiving module is further configured to receive transmission data from the second device on the first transmission resource. The sending module is configured to send the transmission data to the third device on the second transmission resource when the transmission data is successfully received by the communication apparatus.

According to a fourth aspect, a communication apparatus is provided, including a sending module. The sending module is configured to send first scheduling indication information and second scheduling indication information to a first device, where the first scheduling indication information indicates a first transmission resource from the communication apparatus to the first device, and the second scheduling indication information indicates a second transmission resource from the first device to a third device. The sending module is further configured to send transmission data to the first device on the first transmission resource, so that the first device sends the transmission data to the third device on the second transmission resource.

According to a fifth aspect, a communication apparatus is provided, including a transceiver, a processor, and a memory, where the memory stores instructions executed by the processor, and when the instructions are executed by the processor, the communication apparatus is enabled to: receive first scheduling indication information and second scheduling indication information from a second device through the transceiver, where the first scheduling indication information indicates a first transmission resource from the second device to the communication apparatus, and the second scheduling indication information indicates a second transmission resource from the communication apparatus to a third device; receive transmission data from the second device on the first transmission resource through the transceiver; and send the transmission data to the third device on the second transmission resource through the transceiver when the transmission data is successfully received by the communication apparatus.

In some embodiments of the fifth aspect, the processor executes the instructions to enable the communication apparatus to: receive first feedback information from the third device through the transceiver, where the first feedback information indicates whether the third device successfully receives the transmission data; and send first joint feedback information to the second device through the transceiver, where the first joint feedback information includes the first feedback information and second feedback information, and the second feedback information indicates that the communication apparatus successfully receives the transmission data.

In some embodiments of the fifth aspect, the first scheduling indication information and the second scheduling indication information are carried in same control signaling.

In some embodiments of the fifth aspect, the first scheduling indication information is carried in first control signaling, the first control signaling includes a first identifier, the second scheduling indication information is carried in second control signaling, and the second control signaling includes a second identifier associated with the first identifier.

In some embodiments of the fifth aspect, the processor executes the instructions to enable the communication apparatus to send second joint feedback information to the second device through the transceiver when the transmission data is not successfully received by the communication apparatus, where the second joint feedback information includes third feedback information and fourth feedback information, the third feedback information indicates that the communication apparatus fails to receive the transmission data, and the fourth feedback information indicates that the third device fails to receive the transmission data.

In some embodiments of the fifth aspect, the processor executes the instructions to enable the communication apparatus to: send third feedback information to the second device through the transceiver when the transmission data is not successfully received by the communication apparatus, where the third feedback information indicates that the communication apparatus fails to receive the transmission data; and send fourth feedback information to the second device through the transceiver, where the fourth feedback information indicates that the third device fails to receive the transmission data.

In some embodiments of the fifth aspect, the processor executes the instructions to enable the communication apparatus to: determine a destination address based on cached data of the communication apparatus, where the destination address corresponds to a destination device; and send, to the destination device on the second transmission resource through the transceiver, data that is in the cached data and that corresponds to the destination address.

In some embodiments of the fifth aspect, types of the communication apparatus and the third device are terminal devices, and there is a PC5 interface between the communication apparatus and the third device. A type of the second device is a terminal device, and there is a PC5 interface between the communication apparatus and the second device; or a type of the second device is a network device, and there is a Uu interface between the communication apparatus and the second device.

According to a sixth aspect, a communication apparatus is provided, including a transceiver, a processor, and a memory, where the memory stores instructions executed by the processor, and when the instructions are executed by the processor, the communication apparatus is enabled to: send first scheduling indication information and second scheduling indication information to a first device through the transceiver, where the first scheduling indication information indicates a first transmission resource from the communication apparatus to the first device, and the second scheduling indication information indicates a second transmission resource from the first device to a third device; and send transmission data to the first device on the first transmission resource through the transceiver, so that the first device sends the transmission data to the third device on the second transmission resource.

In some embodiments of the sixth aspect, the processor executes the instructions to enable the communication apparatus to receive joint feedback information from the first device through the transceiver, where the joint feedback information includes first feedback information and second feedback information, the first feedback information indicates whether the third device successfully receives the transmission data, and the second feedback information indicates whether the first device successfully receives the transmission data.

In some embodiments of the sixth aspect, the processor executes the instructions to enable the communication apparatus to receive third feedback information from the first device, where the third feedback information indicates that the first device fails to receive the transmission data. Optionally, the processor executes the instructions to further enable the communication apparatus to receive fourth feedback information from the first device, where the fourth feedback information indicates that the second transmission resource is used to transmit cached data of a destination address and indicates whether a destination device corresponding to the destination address successfully receives the cached data.

In some embodiments of the sixth aspect, the first scheduling indication information and the second scheduling indication information are carried in same control signaling.

In some embodiments of the sixth aspect, the first scheduling indication information is carried in first control signaling, the first control signaling includes a first identifier, the second scheduling indication information is carried in second control signaling, and the second control signaling includes a second identifier associated with the first identifier.

In some embodiments of the sixth aspect, types of the first device and the third device are terminal devices, and there is a PC5 interface between the first device and the third device. A type of the communication apparatus is a terminal device, and there is a PC5 interface between the first device and the communication apparatus; or a type of the communication apparatus is a network device, and there is a Uu interface between the first device and the communication apparatus.

According to a seventh aspect, a computer-readable storage medium is provided. The computer-readable storage medium stores computer-executable instructions. When the computer-executable instructions are executed by a processor, an operation of the method according to any one of the first aspect or embodiments of the first aspect is implemented, or an operation of the method according to any one of the second aspect or embodiments of the second aspect is implemented.

According to an eighth aspect, a chip or a chip system is provided. The chip or the chip system includes a processing circuit, and is configured to: perform an operation of the method according to any one of the first aspect or embodiments of the first aspect, or implement an operation of the method according to any one of the second aspect or embodiments of the second aspect.

According to a ninth aspect, a computer program or a computer program product is provided. The computer program or the computer program product is tangibly stored in a computer-readable medium and includes computer-executable instructions. When the computer-executable instructions are executed, an operation of the method according to any one of the first aspect or embodiments of the first aspect is implemented, or an operation of the method according to any one of the second aspect or embodiments of the second aspect is implemented.

### BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, same or similar reference numerals indicate same or similar elements.
FIG. 1 is a diagram of a relay scenario;
FIG. 2 is a schematic of a protocol stack of layer-2 UE-to-network relay;
FIG. 3 is a schematic of a scenario to which some embodiments of this disclosure are applicable;
FIG. 4 is a signaling interaction schematic of a data transmission process according to some embodiments of this disclosure;
FIG. 5 is a schematic of a feedback process according to some embodiments of this disclosure;
FIG. 6 is a schematic of a feedback process according to some embodiments of this disclosure;
FIG. 7 is a schematic of a feedback process according to some embodiments of this disclosure;
FIG. 8 is a signaling interaction schematic of a data transmission process according to some embodiments of this disclosure;
FIG. 9 is a signaling interaction schematic of a data transmission process according to some embodiments of this disclosure;
FIG. 10 is a schematic of a protocol stack related to transmission of multiplexed data according to some embodiments of this disclosure;
FIG. 11 is a block schematic of a communication apparatus for data transmission according to some embodiments of this disclosure;
FIG. 12 is a block schematic of a communication apparatus for data transmission according to some embodiments of this disclosure; and
FIG. 13 is a block schematic of an example device that may be used to implement an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "include" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this disclosure may be implemented according to any proper communication protocol, including but not limited to cellular communication protocols such as 3rd generation (3rd Generation, 3G), 4th generation (4G), 5th generation (5G), and 6th generation (6G), wireless local area network communication protocols such as Institute of Electrical and Electronics Engineers (Institute of Electrical and Electronics Engineers, IEEE) 802.11, and/or any other protocols currently known or developed in the future.

The technical solutions of embodiments of this disclosure are applied to a communication system that complies with any proper communication protocol, for example, a general packet radio service (General Packet Radio Service, GPRS), a global system for mobile communications (Global System for Mobile Communications, GSM) system, an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access system (Time Division-Synchronous Code Division Multiple Access, TD-SCDMA), a frequency division duplex (Frequency Division Duplex, FDD) system, and a time division duplex (Time Division Duplex, TDD) system, a fifth generation system or new radio (New Radio, NR), a future evolved sixth generation communication system, or the like.

For the purpose of illustration, the following describes embodiments of this disclosure in the context of an NR communication system in a 3GPP. However, it should be understood that embodiments of this disclosure are not limited to the communication system, but may be applied to any communication system having a similar problem, for example, a wireless local area network (WLAN), a wired communication system, or another communication system developed in the future.

In this disclosure, the term "terminal device" refers to any terminal device that can perform wired or wireless communication with a network device or another terminal device. The terminal device may be sometimes referred to as a user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of this disclosure.

The term "network device" in this disclosure is an entity or a node that may be configured to communicate with a terminal device, for example, may be an access network device. The access network device may be an apparatus that is deployed in a radio access network and that provides a wireless communication function for the mobile terminal. For example, the access network device may be a radio access network (Radio Access Network, RAN) network device. The access network device may include various types of base stations. For example, the access network device may include various forms of macro base stations, micro base stations, pico base stations, femto base stations, relay stations, access points, remote radio units (Remote Radio Units, RRUs), radio heads (Radio Heads, RHs), and remote radio heads (Remote Radio Heads, RRHs). In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-volume traffic area, and the CU is deployed in a central equipment room. Alternatively, the CU and the DU may be deployed in a same equipment room. The CU and the DU may alternatively be different components in a same rack. For ease of description, in subsequent embodiments of this disclosure, the foregoing apparatuses that provide a wireless communication function for a terminal device are collectively referred to as network devices. This is not specifically limited in embodiments of this disclosure.

In this disclosure, the term "Uu link" is a communication link between a network device and a terminal device. Correspondingly, an interface for communication between the network device and the terminal device may be a Uu interface. Communication from the network device to the terminal device may be referred to as downlink transmission, and communication from the terminal device to the network device may be referred to as uplink transmission. When the network device needs to send downlink data to the terminal device, the network device needs to first notify the terminal device of a corresponding time-frequency resource for receiving the downlink data, so that the terminal device can receive, on the notified time-frequency resource, the downlink data sent by the network device. This process may be referred to as a downlink resource scheduling process of the network device. Generally, a manner in which the network device performs downlink scheduling (downlink scheduling) may be dynamic grant (Dynamic Grant, DG) scheduling or semi-persistent scheduling (Semi-Persistent Scheduling, SPS) scheduling.

In this disclosure, the term "dynamic grant scheduling" may be briefly referred to as dynamic scheduling. The network device may send downlink control information (Downlink Control Information, DCI) to the terminal device to indicate an allocated downlink scheduling resource (also referred to as a downlink grant). The downlink scheduling resource may be used by the terminal device to receive the downlink data. Specifically, the network device may scramble the DCI by using a cell radio network temporary identifier (Cell Radio Network Temporary Identifier, C-RNTI) of the terminal device, and send the scrambled DCI to the terminal device through a physical downlink control channel (Physical Downlink Control Channel, PDCCH). After monitoring and successfully descrambling the DCI, the terminal device may use, on a physical downlink shared channel (Physical Downlink Shared Channel, PDSCH) based on indication information carried in the DCI, the allocated downlink scheduling resource to receive the downlink data sent by the network device.

In this disclosure, the term "semi-persistent scheduling" means that a network device first sends periodic downlink scheduling resource allocation information to a terminal device by using a radio resource control (Radio Resource Control, RRC) signaling message, and then indicates to activate or deactivate a periodic resource by using DCI when necessary. In other words, the configured periodic resource can be used by the terminal device to receive downlink data only after being activated.

In this disclosure, the term "sidelink (sidelink, SL)" is a communication link between terminal devices. In a wireless communication system, two different terminal devices may perform data communication with each other via a network device, or may directly perform communication between the terminal devices without a network device. An interface between the two different terminal devices may be a PC5 interface. An example scenario of sidelink communication is vehicle-to-everything (Vehicle-to-everything, V2X). Data is transmitted between the two different terminal devices in the vehicle-to-everything through a sidelink without a network device. In this way, a communication delay can be effectively reduced. The sidelink supports broadcast, multicast, and unicast communication. The broadcast communication on the sidelink is similar to a behavior of broadcasting system information by a network device. A terminal device sends broadcast service data to the outside without encryption. In this case, other terminal devices that are interested in the broadcast service data and that are within an effective receiving range may receive the broadcast service data. The multicast communication on the sidelink refers to communication between a plurality of terminal devices in a communication group, and each terminal device in the communication group can receive and send data of a corresponding multicast service. The unicast communication on the sidelink is similar to data communication performed after an RRC connection is established between a network device and a terminal device. The unicast communication on the sidelink requires that a unicast connection is first established between two terminal devices. After the unicast connection is established, the two terminal devices may perform data communication based on a negotiated identifier, and data may be encrypted or may not be encrypted. One time of the unicast communication on the sidelink involves two terminal devices, corresponding to a source (Source) layer-2 identifier (Layer-2 Identifier, L2 ID) and a destination (Destination) L2 ID. The source L2 ID and the destination L2 ID are carried in a sub-header of a sidelink media access control data protocol unit (Media Access Control Protocol Data Unit, MAC PDU).

In this disclosure, the term "radio bearer (Radio Bearer, RB)" is a general term for a series of protocol entities and configurations allocated by a network device to a terminal device, and is a service provided by a layer 2 for transmitting user data between the network device and the terminal device, including a series of resources allocated by a packet data convergence protocol (Packet Data Convergence Protocol, PDCP) entity, a radio link control (Radio Link Control, RLC) protocol entity, a MAC protocol entity, and a physical layer (PHY). The radio bearer is classified into a data radio bearer (Data Radio Bearer, DRB) and a signaling radio bearer (Signaling Radio Bearer, SRB). The DRB is used to carry data, and the SRB is used to carry a signaling message. In a scenario of sidelink communication, the radio bearer is classified into a sidelink data radio bearer (SL DRB) and a sidelink signaling radio bearer (SL SRB).

In this disclosure, the term "RLC bearer" refers to a protocol entity and a configuration below an RLC layer, is a lower-layer part of the radio bearer (RB), and includes a series of resources such as an RLC protocol entity and a logical channel. Generally, the RLC bearer is associated with a logical channel at a MAC layer. The RLC bearer is associated with a PDCP entity. In other words, one RLC serves one radio bearer.

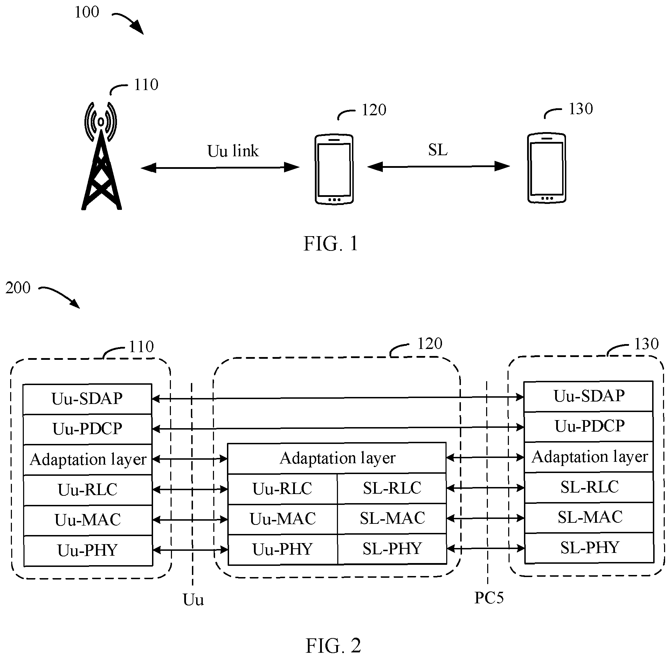

FIG. 1 is a diagram of a relay scenario 100. In the scenario 100, a network device 110, a relay device 120, and a remote device 130 are involved. The relay device 120 may be a terminal device, and referred to as a relay UE 120. The remote device 130 may be a terminal device, and referred to as a remote UE 130.

The relay UE 120 may implement UE-to-network (UE-to-Network, U2N) relay, and the relay UE 120 may assist in communication between the remote UE 130 and the network device 110. The relay UE 120 communicates with the remote UE 130 through a sidelink, and the relay UE 120 communicates with the network device 110 through a Uu link.

A layer 2 design based on a U2N relay technology involves a plurality of different protocol layers. FIG. 2 is a schematic of a user plane protocol stack 200 of layer 2 UE-to-network relay.

Data for the remote UE 130 is relayed and forwarded below a PDCP layer of the relay UE 120. In other words, the relay UE 120 maintains only a relayed RLC bearer, including an RLC layer, a MAC layer, and a PHY layer. As shown in FIG. 2, a protocol stack of the relay UE 120 includes an SL-RLC and a Uu-RLC, an SL-MAC and a Uu-MAC, and an SL-PHY and a Uu-PHY. In this manner, there is an end-to-end PDCP layer, service data adaptation protocol (Service Data Adaptation Protocol, SDAP) layer, and RRC layer between the remote UE 130 and the network device 110, but there is no end-to-end RLC layer, MAC layer, and PHY layer. As shown in FIG. 2, a protocol stack of the remote UE 130 includes a Uu-SDAP, a Uu-PDCP, an SL-RLC, an SL-MAC, and an SL-PHY A protocol stack of the network device 110 includes a Uu-SDAP, a Uu-PDCP, a Uu-RLC, a Uu-MAC, and a Uu-PHY

In addition, an adaptation layer (Adaptation layer) may be further included between the RLC layer and the PDCP layer. The adaptation layer may be used for bearer multiplexing and demultiplexing, to be specific, support in multiplexing a plurality of different radio bearers onto one RLC bearer, or splitting data on one RLC bearer to a plurality of different radio bearers. Adaptation layer communication between the network device 110 and the relay UE 120 is used as an example. An adaptation layer of the network device 110 may multiplex radio bearer data for a plurality of different remote UEs onto one RLC bearer. In other words, the RLC bearer on the Uu link between the network device 110 and the relay UE 120 may include data that is on a plurality of radio bearers for a plurality of remote UEs. After receiving the data from the network device 110, an adaptation layer of the relay UE 120 may correctly map, based on an ID of the remote UE and an ID of the radio bearer (for example, an ID of a DRB) that are carried in the data, the data on the RLC bearer through the Uu link to the plurality of different radio bearers of the plurality of different remote UEs, to implement splitting of the multiplexed data, that is, demultiplexing.

In the scenario 100 shown in FIG. 1, if the network device 110 needs to send data to the remote UE 130, the network device 110 may first send the data to the relay UE 120, and then the relay UE 120 may forward the data to the remote UE 130 to complete data transmission. When sending the data to remote UE 130, the relay UE 120 needs to use a transmission resource on the sidelink between the relay UE 120 and the remote UE 130.

Specifically, in a sidelink communication scenario, when the relay UE 120 (that is, a sending UE in sidelink communication) needs to send the data to the remote UE 130 (that is, a receiving UE in the sidelink communication), the relay UE 120 first reports, to the network device 110 by using a sidelink buffer status report (sidelink Buffer Status Report, SL BSR), a buffer size of each logical channel group of the relay UE 120. In other words, the sidelink BSR reports a volume of the data that the relay UE 120 prepares to send to the remote UE 130. The network device 110 allocates a data transmission resource on the sidelink to the relay UE 120 based on the sidelink BSR reported by the relay UE 120, and indicates the data transmission resource to the relay UE 120 by using DCI. The relay UE 120 performs reception and descrambling to obtain the DCI, and obtains, from the DCI, the transmission resource, also referred to as a sidelink grant (SL grant), on the sidelink that is allocated by the network device 110. The relay UE 120 then sends sidelink control information (Sidelink Control Information, SCI) and sidelink data to the remote UE 130 through a physical sidelink control channel (Physical Sidelink Control Channel, PSCCH) and a physical sidelink shared channel (Physical Sidelink Shared Channel, PSSCH) based on the allocated transmission resource on the sidelink. The SCI includes two parts, is referred as two-stage (two-stage) SCI, and specifically includes first-stage SCI and second-stage SCI. The first-stage SCI is carried on the PSCCH, and the second-stage SCI and the sidelink data are carried on the PSSCH. Information in the first-stage SCI indicates scheduling resources of the second-stage SCI and the sidelink data on the PSSCH. Information in the second-stage SCI indicates a parameter required for transmitting the sidelink data on the PSSCH, for example, related parameters such as a hybrid automatic repeat request (Hybrid Automatic Repeat Request, HARQ) and channel state information (Channel State Information, CSI).

The network device 110 may send the data to the remote UE 130 via the relay UE 120. However, when receiving the data from the network device 110, the relay UE 120 cannot immediately forward the data on the sidelink. Instead, the relay UE 120 needs to first request the transmission resource on the sidelink from the network device 110, and then forwards the data on the allocated transmission resource on the sidelink. It can be learned that the data for the remote UE 130 needs to wait in a buffer of the relay UE 120 until there is an available transmission resource on the sidelink, causing a large transmission delay of the data for the remote UE 130.

In view of this, this disclosure provides a data transmission method. The network device may pre-allocate the transmission resource on the sidelink, so that the data transmission delay can be reduced, and transmission efficiency can be improved.

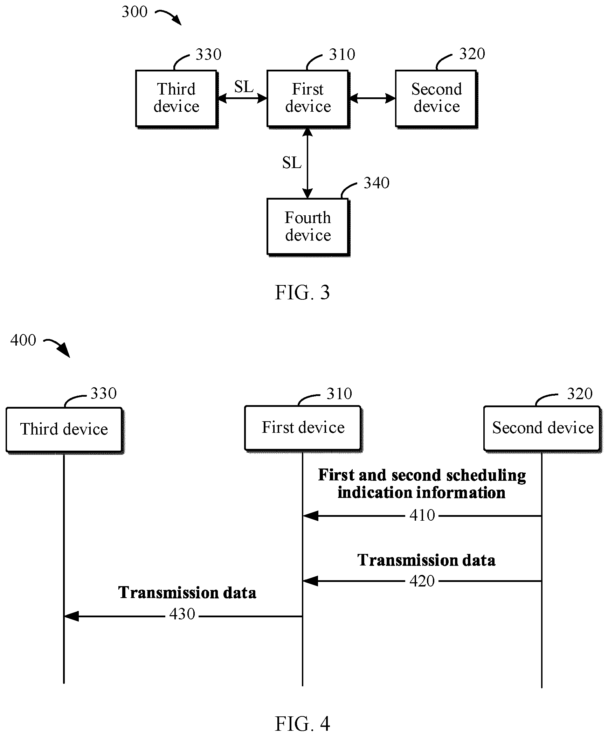

FIG. 3 is a schematic of a scenario 300 to which some embodiments of this disclosure are applicable. In the scenario 300, a first device 310, a second device 320, a third device 330, and a fourth device 340 are included. Specifically, in a scenario in which the second device 320 transmits data to the third device 330, the first device 310 may serve as a relay device in the data transmission process. Similarly, the first device 310 may also serve as a relay device in a process of data transmission from the second device 320 to the fourth device 340.

Types of the first device 310, the third device 330, and the fourth device 340 may all be terminal devices. A communication link between the first device 310 and the third device 330 is a sidelink, and a communication link between the first device 310 and the fourth device 340 is a sidelink.

In some examples, a type of the second device 320 may be a network device, and a communication link between the first device 310 and the second device 320 is a Uu link. In other words, the scenario 300 may be a user equipment-to-network (UE-to-Network, U2N) relay scenario.

In some other examples, the type of the second device 320 may be a terminal device, and the communication link between the first device 310 and the second device 320 is a sidelink. In other words, the scenario 300 may be a user equipment-to-user equipment (UE-to-UE, U2U) relay scenario.

Data transmission from the second device 320 to the third device 330 is used as an example. The first device 310 may serve as a relay device for the data transmission from the second device 320 to the third device 330. However, it may be understood that in another scenario, the data transmission from the second device 320 to the third device 330 may involve a plurality of relay devices, and a function implemented by each of the plurality of relay devices is similar to a function implemented by the first device 310. In addition, it should be noted that although the scenario 300 in FIG. 3 is used as an example for description in this embodiment of this disclosure, this embodiment of this disclosure may also be applied to another scenario involving a plurality of relay devices. Details are not described in this disclosure.

FIG. 4 is a signaling interaction schematic of a data transmission process 400 according to some embodiments of this disclosure. As shown in the figure, the process 400 involves a first device 310, a second device 320, and a third device 330. It may be understood that the process 400 may alternatively be applied to another device. For example, the third device 330 in FIG. 4 may be replaced with a fourth device 340. Details are not described in this disclosure.

The second device 320 sends 410 first scheduling indication information and second scheduling indication information to the first device 310. The first scheduling indication information may indicate a first transmission resource from the second device 320 to the first device 310, and the second scheduling indication information may indicate a second transmission resource from the first device 310 to the third device 330.

The first transmission resource and the second transmission resource may be used for transmission data to be sent by the second device 320 to the third device 330. That the second device 320 sends the first scheduling indication information and the second scheduling indication information may be referred to as a joint scheduling process for the transmission data.

In some embodiments, the first scheduling indication information and the second scheduling indication information may be carried in same control signaling. For example, in a scenario in which the second device 320 is a network device, the first scheduling indication information and the second scheduling indication information may be carried in same DCI, and may be referred to as joint DCI (joint DCI) or joint scheduling information. For example, in a scenario in which the second device 320 is a terminal device, the first scheduling indication information and the second scheduling indication information may be carried in same SCI, and may be referred to as joint SCI (joint SCI) or joint scheduling information. In other words, the second device 320 may send the joint scheduling information to the first device 310, where the joint scheduling information includes the first scheduling indication information and the second scheduling indication information. Optionally, the joint scheduling information may further include feedback scheduling indication information that may indicate a transmission resource used by the first device 310 to provide a feedback for the second device 320.

For example, the joint scheduling information may further indicate a first HARQ process ID corresponding to the first scheduling indication information and a second HARQ process ID corresponding to the second scheduling indication information. Optionally, a correspondence between a process identifier and the first HARQ process ID and the second HARQ process ID may be predefined or may be configured by a network device. In this case, the joint scheduling information may further include the process identifier, and may indicate, based on the correspondence, the first HARQ process ID corresponding to the first scheduling indication information and the second HARQ process ID corresponding to the second scheduling indication information. Optionally, the first HARQ process ID and the second HARQ process ID may alternatively be a same HARQ process ID. In this case, the joint scheduling information may further include the HARQ process ID, and indicate both the first HARQ process ID corresponding to the first scheduling indication information and the second HARQ process ID corresponding to the second scheduling indication information.

In some embodiments, the first scheduling indication information and the second scheduling indication information may be carried in different control signaling. For example, the first scheduling indication information is carried in first control signaling, and the second scheduling indication information is carried in second control signaling. In addition, the first control signaling may include a first identifier, and the second control signaling may include a second identifier associated with the first identifier. For example, in the scenario in which the second device 320 is the network device, the first scheduling indication information may be carried in first DCI including the first identifier, and the second scheduling indication information may be carried in second DCI including the second identifier. It should be noted that a specific implementation of associating the first identifier with the second identifier is not limited in this embodiment of this disclosure. For example, the first identifier and the second identifier are an identifier of the third device 330. For example, the first identifier and the second identifier are a same sequence number. Optionally, the first control signaling may further include a first HARQ process ID corresponding to the first scheduling indication information, and the second control signaling may further include a second HARQ process ID corresponding to the second scheduling indication information. Optionally, the first HARQ process ID and the second HARQ process ID that correspond to the first scheduling indication information and the second scheduling indication information may be configured as a same HARQ process ID. In this case, the HARQ process ID may be optionally carried only in the first scheduling indication information or the second scheduling indication information. Optionally, a correspondence between a process identifier and the first HARQ process ID and the second HARQ process ID may be predefined or may be configured by a network device. In this case, the first control signaling and the second control signaling may both include the process identifier. Alternatively, one (for example, the first control signaling) of the first control signaling and the second control signaling includes the process identifier (or the first HARQ process ID). In this case, the first HARQ process ID corresponding to the first scheduling indication information of the first control signaling and the second HARQ process ID corresponding to the second scheduling indication information included in the second control signaling may be determined by using predefined or preconfigured information. Optionally, the network device may send the correspondence between the process identifier and the first HARQ process ID and the second HARQ process ID to the first device 310, so that the first device 310 may determine HARQ process information in the received first control signaling and second control signaling based on the correspondence.

In the scenario in which the second device 320 is the network device, the second device 320 may send the first scheduling indication information and the second scheduling indication information to the first device 310 through a PDCCH. The first transmission resource may be a transmission resource on a Uu link between the second device 320 and the first device 310, or may be referred to as a Uu interface transmission resource, or may be referred to as a downlink grant (DL grant). The second transmission resource may be a transmission resource on a sidelink between the first device 310 and the third device 330, or may be referred to as a sidelink grant (SL grant). In the scenario in which the second device 320 is the terminal device, the second device 320 may send the first scheduling indication information and the second scheduling indication information to the first device 310 through a PSCCH. The first transmission resource may be a transmission resource on an SL between the second device 320 and the first device 310, or may be referred to as a first sidelink grant (first SL grant). The second transmission resource may be a transmission resource on an SL between the first device 310 and the third device 330, and may also be referred to as a second sidelink grant (second SL grant).

Optionally, in the scenario in which the second device 320 is the terminal device, the second device 320 may obtain, before 410, indication information about the first transmission resource and the second transmission resource from a network device connected to the second device 320.

Specifically, when the second device 320 needs to send transmission data to the third device 330, the second device 320 may send a sidelink buffer status report (SL BSR) to the network device. The SL BSR may indicate a data volume of the transmission data that needs to be sent to the third device 330.

The network device may allocate, to the transmission data based on the SL BSR, the first transmission resource used by the second device 320 for transmission to the first device 310 and the second transmission resource used by the first device 310 for transmission to the third device 330. Further, the network device may send the first scheduling indication information and the second scheduling indication information to the second device 320. The first scheduling indication information may indicate the first transmission resource from the second device 320 to the first device 310, and the second scheduling indication information may indicate the second transmission resource from the first device 310 to the third device 330. It may be understood that the network device may perform joint scheduling on the first transmission resource and the second transmission resource by using joint DCI, or the first scheduling indication information and the second scheduling indication information may be carried in different control signaling and indicated by using an association identifier. It may be understood that this process is similar to the foregoing embodiment in which the second device 320 serves as a network device to send the first scheduling indication information and the second scheduling indication information to the first device 310. For brevity, details are not described herein again.

The second device 320 may send the first scheduling indication information and the second scheduling indication information to the first device 310 in the process 410. Optionally, the first scheduling indication information and the second scheduling indication information may be carried in one piece of control signaling, for example, joint SCI. Alternatively, optionally, the first scheduling indication information and the second scheduling indication information may be carried in different control signaling. For example, the first scheduling indication information is carried in first SCI including the first identifier, the second scheduling indication information is carried in second SCI including the second identifier, and the second identifier is associated with the first identifier.

The second device 320 sends 420 the transmission data to the first device 310 on the first transmission resource.

In the scenario in which the second device 320 is the network device, the second device 320 may send the transmission data to the first device 310 through a PDSCH. Correspondingly, the first device 310 may receive the transmission data on the first transmission resource.

The first device 310 may send 430 the transmission data from the second device 320 to the third device 330 on the second transmission resource.

In this way, in this embodiment of this disclosure, before receiving the transmission data from the second device 320 for the third device 330, the first device 310 first receives a scheduling indication about the first transmission resource and the second transmission resource. In this way, after receiving the transmission data, the first device 310 does not need to request a scheduling resource from the network device, and performs transmission by using only the scheduled second transmission resource. In this way, signaling overheads between the first device 310 and the network device is reduced, the transmission data is sent to the third device 330 in a more timely manner, and a data transmission delay is reduced.

Specifically, in this embodiment of this disclosure, when the transmission data is successfully received by the first device 310, the first device 310 sends the transmission data to the third device 330.

The first device 310 may send first-stage SCI to the third device 330 through the PSCCH, where the first-stage SCI may indicate the second transmission resource. Then, the first device 310 may send second-stage SCI and the transmission data to the third device 330 through a PSSCH. Specifically, the first device 310 sends the second-stage SCI and the transmission data on the second transmission resource. Correspondingly, the third device 330 may receive the transmission data on the second transmission resource based on the first-stage SCI.

In some embodiments, in a process in which the first device 310 sends the transmission data to the third device 330, the first device 310 may separately perform packet assembly processing on the transmission data for the third device 330, that is, separate the processing from a MAC packet assembly process of other data. For example, the network device may configure a dedicated logical channel or logical channel group for the transmission data of the third device 330, or optionally, may set a highest priority for a logical channel for the transmission data of the third device 330. Alternatively, optionally, a separate logical channel may be configured for the third device 330. The separate logical channel is a logical channel of a link between the first device 310 and the third device 330 and can be used only to carry the transmission data of the third device 330. In this way, it can be ensured that the second transmission resource is dedicated to the transmission data of the third device 330.

Specifically, the scenario in which the second device 320 is the network device is used as an example. After the second device 320 sends the transmission data to the first device 310 through the Uu link, an adaptation layer of the first device 310 may receive the transmission data from an RLC bearer (that is, Uu-RLC) at a lower layer. Then, the adaptation layer of the first device 310 may deliver the transmission data to an SL-side protocol stack (SL-RLC), and an SL-side MAC (SL-MAC) entity of the first device 310 may perform logical channel packet assembly based on the second transmission resource, that is, may receive data from different logical channels and form a MAC PDU. In a possible implementation, the SL-MAC entity receives, based on an indication of the joint scheduling information and the second transmission resource, data from a logical channel or a logical channel group corresponding to the transmission data, and performs MAC packet assembly. The MAC PDU is delivered by the MAC entity (SL-MAC) of the first device 310 to a physical layer (SL-PHY), and is sent to the third device 330, that is, a physical layer (SL-PHY) of the third device 330.

It may be understood that in a process in which the transmission data is sent by the second device 320 to the third device 330 via the first device 310, the transmission data is first sent to the first device 310 through a link (referred to as a first link) between the second device 320 and the first device 310, and then is sent to the third device 330 through a link (referred to as a second link) between the first device 310 and the third device 330.

In some embodiments of this disclosure, it is assumed that the network device configures transmission on the sidelink to HARQ feedback disabled (HARQ feedback disable). In other words, for transmission on the sidelink (for example, between the first device 310 and the third device 330), a receiving device (for example, the third device 330) does not provide a feedback. Specifically, in the process 400 shown in FIG. 4, the third device 330 does not provide a HARQ feedback for the first device 310.

In some embodiments of this disclosure, it is assumed that the network device configures transmission on the sidelink to HARQ feedback enabled (HARQ feedback enable). In other words, for the transmission on the sidelink (for example, between the first device 310 and the third device 330), a receiving device (for example, the third device 330) provides a feedback. Specifically, in the process 400 shown in FIG. 4, the third device 330 provides a HARQ feedback for the first device 310. In this case, if the third device 330 successfully receives the transmission data from the first device 310, the third device 330 may feed back an ACK to the first device 310. If the third device 330 fails to receive the transmission data from the first device 310, the third device 330 may feed back a NACK to the first device 310.

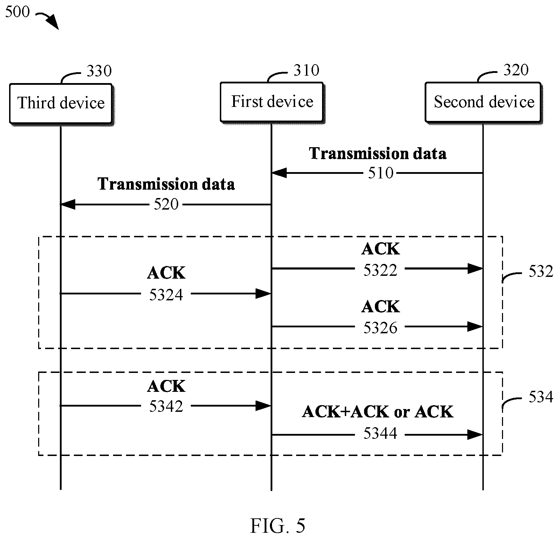

For the process in which the transmission data is sent from the second device 320 to the third device 330 via the first device 310, the first device 310 may feed back, to the second device 320, whether the transmission data is successfully transmitted. In some embodiments, the first device 310 may separately feed back, to the second device 320 by using two different pieces of signaling, whether transmission on the first link is successful and whether transmission on the second link is successful. Specifically, the first device 310 may separately feed back whether the first device 310 successfully receives the transmission data from the second device 320 and whether the third device 330 successfully receives the transmission data from the first device 310. In some embodiments, the first device 310 may send a joint feedback to the second device 320, to indicate whether transmission on the first link is successful and whether the transmission on the second link is successful, or to indicate whether the transmission data is successfully received by the third device. In some embodiments, the first device 310 may provide a feedback to the second device 320 by using one piece of signaling. In some examples, the first device 310 may send the feedback to the second device 320 through a PUCCH, and the third device 330 may send a feedback to the first device 310 through a physical sidelink feedback channel (Physical Sidelink Feedback Channel, PSFCH). The following separately describes various feedback cases with reference to FIG. 5 to FIG. 7.

FIG. 5 is a schematic of a feedback process 500 according to some embodiments of this disclosure.

In the process 500, a first device 310 receives 510 transmission data from a second device 320, and a third device 330 receives 520 the transmission data from the first device 310. In other words, in an example in FIG. 5, transmission on a first link succeeds and transmission on a second link succeeds. In other words, the first device 310 successfully receives the transmission data from the second device 320, and the third device 330 successfully receives the transmission data from the first device 310.

In some embodiments, as shown in a dashed-line box 532 in FIG. 5, the first device 310 sends 5322 first feedback information to the second device 320, where the first feedback information indicates that the first device 310 successfully receives the transmission data from the second device 320. For example, the first feedback information may be an ACK. The third device 330 sends 5324 second feedback information to the first device 310, where the second feedback information indicates that the third device 330 successfully receives the transmission data from the first device 310. The first device 310 forwards 5326 the second feedback information to the second device 320. For example, the second feedback information may be an ACK. Optionally, the first feedback information and the second feedback information may be indicated by using one bit. For example, 1 indicates an ACK, or 0 indicates a NACK. It should be noted that a sequence of performing 5322 and 5324 is not limited in this disclosure.

In some embodiments, as shown in a dashed-line box 534 in FIG. 5, the third device 330 sends 5342 second feedback information to the first device 310, where the second feedback information indicates that the third device 330 successfully receives the transmission data from the first device 310. Optionally, the second feedback information may be indicated by using one bit. For example, 1 indicates an ACK, or 0 indicates a NACK. The first device 310 sends 5344 joint feedback information to the second device 320. In some examples, the joint feedback information may represent ACK+ACK, respectively indicating that the first device 310 successfully receives the transmission data from the second device 320 and the third device 330 successfully receives the transmission data from the first device 310. In other words, the joint feedback information may indicate whether transmission on each link is successful. Optionally, the joint feedback information may be indicated by using two bits. For example, 11 represents ACK+ACK, or 00 represents NACK+NACK. In some other examples, the joint feedback information may represent an ACK, indicating that the transmission data is successfully received by the third device 330. In other words, the joint feedback information may indicate whether an entire transmission process is successful. Optionally, the joint feedback information may be indicated by using one bit. For example, 1 indicates an ACK, or 0 indicates a NACK.

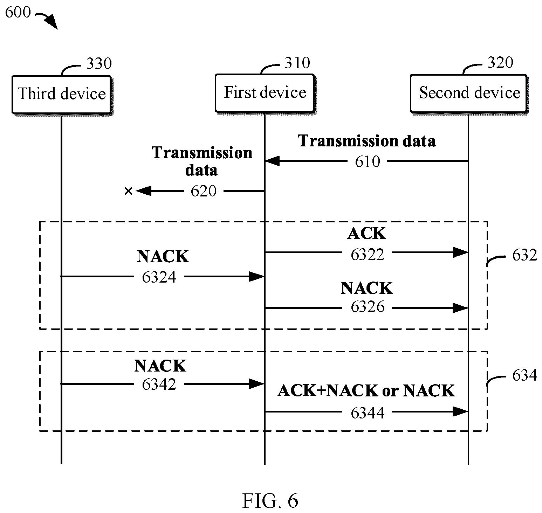

FIG. 6 is a schematic of a feedback process 600 according to some embodiments of this disclosure.

In the process 600, a first device 310 receives 610 transmission data from a second device 320, but 620 transmission data that the first device 310 sends to a third device 330 is not received by the third device 330. In other words, in an example in FIG. 6, transmission on a first link succeeds and transmission on a second link fails. In other words, the first device 310 successfully receives the transmission data from the second device 320, but the third device 330 fails to receive the transmission data from the first device 310.

In some embodiments, as shown in a dashed-line box 632 in FIG. 6, the first device 310 sends 6322 first feedback information to the second device 320, where the first feedback information indicates that the first device 310 successfully receives the transmission data from the second device 320. For example, the first feedback information may be an ACK. The third device 330 sends 6324 second feedback information to the first device 310, where the second feedback information indicates that the third device 330 fails to receive the transmission data from the first device 310. The first device 310 forwards 6326 the second feedback information to the second device 320. For example, the second feedback information may be a NACK. Optionally, the first feedback information and the second feedback information may be indicated by using one bit. For example, 1 indicates an ACK, and 0 indicates a NACK. It should be noted that a sequence of performing 6322 and 6324 is not limited in this disclosure.

In some embodiments, as shown in a dashed-line box 634 in FIG. 6, the third device 330 sends 6342 second feedback information to the first device 310, where the second feedback information indicates that the third device 330 fails to receive the transmission data from the first device 310. For example, the second feedback information may be a NACK. Optionally, the second feedback information may be indicated by using one bit. For example, 0 indicates a NACK. The first device 310 sends 6344 joint feedback information to the second device 320. In some examples, the joint feedback information may represent ACK+NACK, respectively indicating that the first device 310 successfully receives the transmission data from the second device 320 and the third device 330 fails to receive the transmission data from the first device 310. In other words, the joint feedback information may indicate whether each link is successful. Optionally, the joint feedback information may be indicated by using two bits. For example, 10 indicates ACK+NACK. In some other examples, the joint feedback information may indicate a NACK, indicating that the transmission data is not successfully received by the third device 330. In other words, the joint feedback information may indicate whether an entire transmission process is successful. Optionally, the joint feedback information may be indicated by using one bit. For example, 0 indicates a NACK.

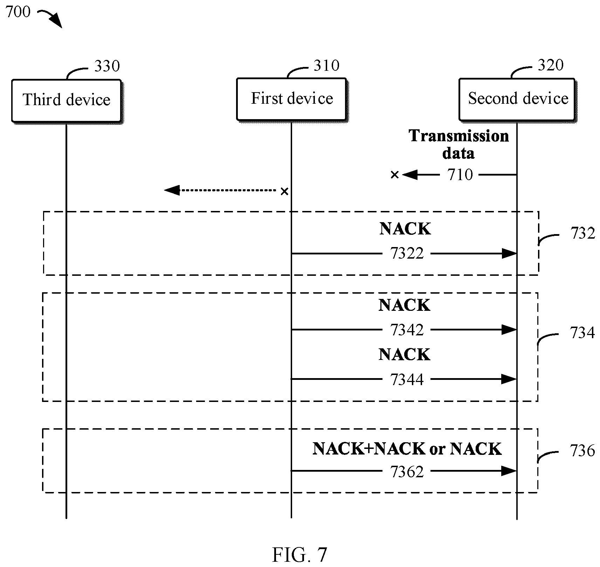

FIG. 7 is a schematic of a feedback process 700 according to some embodiments of this disclosure.

In the process 700, 710 transmission data sent by a second device 320 to a first device 310 is not received by the first device 310. In other words, in an example in FIG. 7, transmission on a first link fails. In other words, the first device 310 fails to receive the transmission data from the second device 320. In this case, the first device 310 cannot relay the transmission data to a third device 330.

In some embodiments, as shown in a dashed-line box 732 in FIG. 7, the first device 310 sends 7322 first feedback information to the second device 320, where the first feedback information indicates that the first device 310 fails to receive the transmission data from the second device 320. For example, the first feedback information may be a NACK. Optionally, the first feedback information may be indicated by using one bit. For example, 0 indicates a NACK.

In some embodiments, as shown in a dashed-line box 734 in FIG. 7, the first device 310 sends 7342 first feedback information to the second device 320, where the first feedback information indicates that the first device 310 fails to receive the transmission data from the second device 320. The first device 310 sends 7344 second feedback information to the second device 320, where the second feedback information indicates that the third device 330 fails to receive the transmission data. For example, both the first feedback information and the second feedback information may be a NACK. Optionally, the first feedback information and the second feedback information may be indicated by using one bit. For example, 0 indicates a NACK. It should be noted that a sequence of performing 7342 and 7344 is not limited in this disclosure.

In some embodiments, as shown in a dashed-line box 736 in FIG. 7, the first device 310 sends 7362 joint feedback information to the second device 320. In some examples, the joint feedback information may represent ACK+NACK, respectively indicating that the first device 310 successfully receives the transmission data from the second device 320 and the third device 330 fails to receive the transmission data from the first device 310. In other words, the joint feedback information may indicate whether each link is successful. Optionally, the joint feedback information may be indicated by using two bits. For example, 10 indicates ACK+NACK. In some other examples, the joint feedback information may indicate a NACK, indicating that the transmission data is not successfully received by the third device 330. In other words, the joint feedback information may indicate whether an entire transmission process is successful. Optionally, the joint feedback information may be indicated by using one bit. For example, 0 indicates a NACK.

It should be understood that in the foregoing examples shown with reference to FIG. 5 to FIG. 7, 1 may represent an ACK, and 0 may represent a NACK. However, it should be noted that 1 may alternatively represent a NACK, and 0 may alternatively represent an ACK. This is not limited in this disclosure.

In this embodiment of this disclosure, a first link feedback resource (for example, a time-frequency resource) used by the first device 310 to provide the feedback for the second device 320 may be indicated together with the first transmission resource in 410 shown in FIG. 4. In other words, in 410, the second device 320 further sends indication information of the first link feedback resource to the first device 310. For example, when the second device 320 is the network device, the first link feedback resource may also be referred to as a Uu interface feedback resource.

In this embodiment of this disclosure, a second link feedback resource (for example, a time-frequency resource) used by the third device 330 to provide the feedback for the first device 310 may be determined by the third device 330 based on the second transmission resource. The second link feedback resource may be a sidelink feedback resource, and may include a frequency domain resource and a time domain resource used for a sidelink HARQ feedback.

Specifically, the frequency domain resource used for the sidelink HARQ feedback may be preconfigured by a network device. For example, the network device may indicate, in a bitmap (bitmap) manner, a location, in a resource pool, of the frequency domain resource that can be used for the sidelink HARQ feedback, where the resource pool may be an available resource for sidelink communication of the network device. Generally, there is a correspondence between a transmission resource used for transmission data on a PSSCH and the frequency domain resource used for the sidelink HARQ feedback. In this case, a frequency domain location corresponding to the second transmission resource may be determined based on the correspondence, that is, the frequency domain resource for the sidelink HARQ feedback provided by the third device 330 to the first device 310.

Specifically, the time domain resource used for the sidelink HARQ feedback may be determined based on a period parameter and a minimum time gap parameter that are preconfigured by the network device. The period parameter may be a sidelink PSFCH period, represented as sl-PSFCH-Period, and a value of the period parameter may be a predetermined range, for example, s10, s11, s12, and sl4. In other words, a period of a configured PSFCH resource may be represented by sl-PSFCH-Period={slO, sl1, sl2, sl4}, and may be in a unit of a slot (slot), where sl-PSFCH-Period=sl0 indicates a case of sidelink HARQ feedback disabled, and sl-PSFCH-Period=sl2 indicates that the PSFCH resource is configured every two slots. The minimum time gap parameter may be a sidelink minimum time gap PSFCH, represented as sl-MinTimeGapPSFCH, and a value of the minimum time gap parameter may be a predetermined range, for example, sl2, sl3. In other words, sl-MinTimeGapPSFCH={sl2, sl3} may indicate a minimum time gap between a time domain resource location of the PSFCH and a last slot in which PSSCH data is sent.

In this way, based on the foregoing descriptions with reference to FIG. 4 to FIG. 7, before sending 330 the transmission data to be sent to the third device to the first device 310, the second device 320 first sends indication information of the first transmission resource and the second transmission resource to the first device 310, so that when receiving the transmission data from the second device 320, the first device 310 may forward the transmission data to the third device 330 by using the second transmission resource. In this way, signaling overheads can be reduced, and waiting duration of the transmission data at the first device 310 can be reduced or even avoided. This reduces a data transmission delay and power consumption of the device.

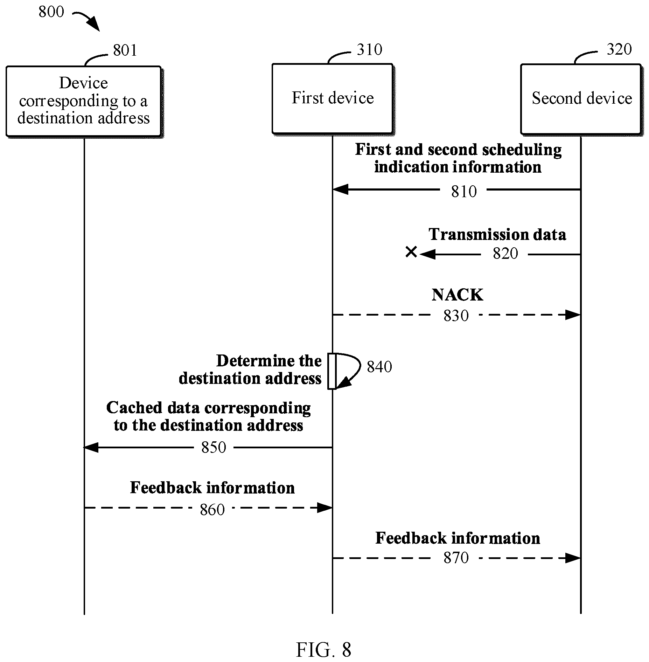

FIG. 8 is a signaling interaction schematic of a data transmission process 800 according to some embodiments of this disclosure. As shown in the figure, the process 800 involves a first device 310, a second device 320, and a device 801 corresponding to a destination address.

The second device 320 sends 810 first scheduling indication information and second scheduling indication information to the first device 310. The first scheduling indication information may indicate a first transmission resource from the second device 320 to the first device 310, and the second scheduling indication information may indicate a second transmission resource from the first device 310 to the third device 330. In this process, the second device 320 performs joint scheduling on the first transmission resource and the second transmission resource. For the process, refer to related descriptions in 410 in FIG. 4. For brevity, details are not described herein again.

The second device 320 sends 820 transmission data to the first device 310 on the first transmission resource, but the first device 310 fails to receive the transmission data.

A reason why the first device 310 fails to receive the transmission data is not limited in this embodiment of this disclosure. For example, the transmission data may be lost. For example, the first device 310 may decode data incorrectly. Alternatively, there may be another reason.

Optionally, as shown in FIG. 8, the first device 310 may send 830 feedback information (NACK) to the second device 320, to indicate that the transmission data is not successfully received. Optionally, the first device 310 may not provide any feedback. In this case, if the second device 320 receives no feedback within a predetermined time period, it may be determined that DTX occurs.

The first device 310 determines 840 the destination address. In this embodiment of this disclosure, it is assumed that a device corresponding to the destination address is the destination device 801. It may be understood that the destination device 801 may be a device that has established a sidelink with the first device 310. In addition, it may be understood that the destination device 801 may be the third device 330, or may be another device different from the third device 330.

In 810, the second device 320 has scheduled the second transmission resource, but due to a transmission failure in 820, the second transmission resource is no longer used for the transmission data. Optionally, the unused second transmission resource may be referred to as a redundant sidelink scheduling resource or the like. In this embodiment of this disclosure, the first device 310 may determine the destination address for the second transmission resource, so that the second transmission resource may be used to transmit data corresponding to the destination address. In other words, the second transmission resource may be used to transmit other sidelink data, and the other sidelink data is different from the transmission data in 820.

In some embodiments, the first device 310 may select a destination (Destination) address associated with any one of unicast, multicast, or broadcast. For example, a destination address of a MAC CE with a highest priority and/or a logical channel with a highest priority may be selected from logical channels and MAC CEs that meet a predetermined condition. If there are a plurality of addresses that meet the condition for being selected, the first device 310 may further determine the destination address based on cached data of the first device 310.

Optionally, the first device 310 may determine the destination address based on a cached data volume corresponding to the plurality of addresses, actual waiting duration of the cached data corresponding to the plurality of addresses, and a delay performance requirement of the cached data corresponding to the plurality of addresses. For example, an address corresponding to the cached data having a maximum data volume may be determined as the destination address. For example, an address corresponding to the cached data having longest actual waiting duration may be determined as the destination address. For example, an address corresponding to the cached data having a highest delay performance requirement may be determined as the destination address. For example, scores of the plurality of addresses may be determined (for example, in a weighting manner) based on the cached data volume, the actual waiting duration, the delay performance requirement, and the like, and then the destination address is determined based on the scores. It may be understood that the destination address may be determined in another manner. This is not limited in this disclosure.

In some embodiments, if the second transmission resource is indicated to be used only by the third device 330, the first device 310 may determine the destination address corresponding to the third device 330.

In some embodiments, if the second transmission resource is indicated to be used only for one or some logical channels, the first device 310 may determine the destination address from the one or some logical channels. Optionally, a network device may indicate, through configuration, that the second transmission resource can be used only for specific logical channel data. For example, the network device may specify that the second transmission resource can be used only for a logical channel whose priority is lower than or higher than a preset value. For example, the network device may set a state of a logical channel to enabled (enable) or disabled (disable), and specify that the second transmission resource can be used only for a logical channel whose state is enabled.

In some embodiments, the network device may configure whether the redundant sidelink scheduling resource can be used for a specific terminal device, or the network device may configure whether the redundant sidelink scheduling resource can be used for a specific logical channel of the terminal device, or the like. In this case, when determining the destination address, the first device 310 may determine, based on the configuration, the destination address that is configured to use the redundant sidelink scheduling resource.

In some embodiments, the network device may configure that the redundant sidelink scheduling resource can be used only for a logical channel that meets a preset condition. For example, the preset condition may be that delay performance is less than a specific threshold. In this case, when determining the destination address, the first device 310 may determine, based on the configuration, a logical channel that is of the destination address and that meets the preset condition.

In some embodiments, it is assumed that a current time of transmission corresponding to the second transmission resource in joint scheduling information is configured to HARQ feedback disabled. In other words, the second transmission resource can be used for data transmission of a terminal device with sidelink HARQ feedback disabled or data transmission on a logical channel that is configured to HARQ feedback disabled. In this case, when determining the destination address, the first device 310 may select a destination address of a terminal device with sidelink or logical channel HARQ feedback disabled.

Based on the foregoing descriptions, when determining the destination address, the first device 310 may be limited by some factors, and cannot randomly select the destination address. In other words, use of the redundant second transmission resource may be limited to some extent.

The first device 310 sends 850, to the destination device 801 corresponding to the destination address on the second transmission resource, the cached data corresponding to the destination address.

Specifically, the first device 310 may perform MAC PDU packet assembly on the cached data of a logical channel of the destination address, and send, on the second transmission resource, a MAC PDU to the destination device 801 corresponding to the destination address.

It may be understood that, in consideration of various cases in which the first device 310 determines the destination address, the destination device 801 may be the third device 330, or may be another terminal device different from the third device 330, for example, a fourth device 340.

Optionally, as shown in FIG. 8, when the current time of transmission of the destination device 801 is configured to sidelink HARQ feedback enabled, the destination device 801 may further send 860 feedback information to the first device 310, for example, an ACK or a NACK. In addition, the first device 310 may further forward 870 the feedback information to the second device 820.

Optionally, in some embodiments, the feedback sent by the first device 310 to the second device 320 is the ACK, but a decoding error may occur in the second device 320. In other words, the ACK is decoded as the NACK. After that, the second device 320 may continue to allocate a retransmission resource (similar to 810 in FIG. 8) used for the transmission data, and send retransmitted data to the first device 310. After receiving the retransmitted data, the first device 310 may discard the retransmission data. It may be understood that, in this case, because the retransmission resource also includes the second transmission resource between the first device 310 and the third device 330, the first device 310 may similarly use the second transmission resource in the retransmission resource based on 840 and 850 shown in FIG. 8. For brevity, details are not described herein again.

It should be noted that the processes in FIG. 8 are merely examples, and cannot be construed as a limitation on an execution sequence of the processes. For example, 830 does not need to be performed before 840. For example, 830 may even be performed after 850. This is not limited in this disclosure.

It can be learned that the second transmission resource in joint scheduling may be used to transmit cached data on another sidelink. In this way, sidelink resources can be flexibly used, a waste of some resources in the joint scheduling is avoided, and resource utilization is improved.

In addition, different from processes 840 and 850 in FIG. 8, in some other embodiments, after 820, the second transmission resource may be ignored. In other words, the first device 310 may discard the redundant sidelink scheduling resource.

In this way, in this embodiment of this disclosure, the network device may configure specific cases in which the redundant sidelink scheduling resource can be used to limit a redundant sidelink scheduling resource usage scope or scenario, or the network device may configure the first device 310 to discard the redundant sidelink scheduling resource. This improves flexibility of the redundant sidelink scheduling resource. Further, for the joint scheduling sent by the second device 320 to the first device 310, if the second transmission resource is redundant because the second device 320 fails to transmit data to the first device 310, the first device 310 may use or discard the redundant second transmission resource based on configuration of the network device.

With reference to FIG. 4 to FIG. 8, the foregoing describes embodiments in which the second device 320 sends the transmission data to the third device 330 through the first device 310. In some other scenarios, the second device 320 may send data to a plurality of terminal devices through the first device 310. Optionally, the second device 320 may multiplex data on a plurality of bearers for the plurality of terminal devices, and then send the multiplexed data to the first device 310. Then, the first device 310 may demultiplex the multiplexed data, and then allocate the multiplexed data to corresponding bearers.

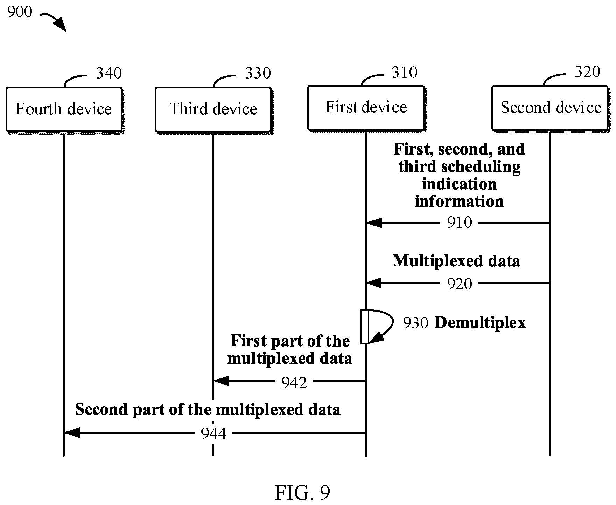

FIG. 9 is a signaling interaction schematic of a data transmission process 900 according to some embodiments of this disclosure. As shown in the figure, the process 900 involves a first device 310, a second device 320, a third device 330, and a fourth device 340. For example, the second device 320 may send transmission data to the third device 330 and the fourth device 340 through the first device 310. The second device 320 is a sending device, the first device 310 is a relay device, and the third device 330 and the fourth device 340 are remote devices. It may be understood that the process 900 may also be applicable to more remote devices, and details are not described in this disclosure.

The second device 320 sends first scheduling indication information, second scheduling indication information, and third scheduling indication information to the first device 310. The first scheduling indication information may indicate a first transmission resource from the second device 320 to the first device 310, the second scheduling indication information may indicate a second transmission resource from the first device 310 to the third device 330, and the third scheduling indication information may indicate a third transmission resource from the first device 310 to the fourth device 340.

In other words, the second device 320 may perform joint scheduling on the first transmission resource, the second transmission resource, and the third resource, to avoid a case in which the first device 310 sends a scheduling request to the second device 320, and reduce signaling overheads.

Optionally, the first scheduling indication information, the second scheduling indication information, and the third scheduling indication information may be carried in same control signaling, for example, may be joint scheduling information. Optionally, the first scheduling indication information, the second scheduling indication information, and the third scheduling indication information may be respectively carried in different control signaling, and the control signaling may include identifiers associated with each other. For a specific example, refer to the foregoing embodiment described with reference to 410 in FIG. 4. For brevity, details are not described herein again.

The second device 320 sends 920 multiplexed data to the first device 310.

Specifically, the second device 320 may multiplex data for the third device 330 and the fourth device 340 onto one RLC bearer, and then send the multiplexed data to the first device 310 on the first transmission resource. Correspondingly, the first device 310 may receive the multiplexed data from the second device 320 on the first transmission resource.

The first device 310 demultiplexes the multiplexed data received in 930.

Specifically, the first device 310 may split the multiplexed data into first partial data for the third device 330 and second partial data for the fourth device 340 based on a device ID and a radio bearer ID in the multiplexed data. In addition, the first device 310 may further deliver the first partial data to an RLC bearer between the first device 310 and the third device 330, and deliver the second partial data to an RLC bearer between the first device 310 and the fourth device 340.

The first device 310 sends 942 the first partial data to the third device 330 on the second transmission resource, and sends 944 the second partial data to the fourth device 340 on the third transmission resource. It may be understood that the process 942 in which the first device 310 sends the first partial data and the process 944 in which the first device 310 sends the second partial data are similar to the foregoing process 430 in which the first device 310 sends transmission data described with reference to FIG. 4. For brevity, details are not described herein again. In addition, it may be understood that an execution sequence of 942 and 944 is not limited in this embodiment of this disclosure.

It may be understood that, in the process 900, the first device 310 may further provide a feedback for the second device 320. Optionally, a joint feedback manner or a separate feedback manner may be used. For specific implementation, refer to the foregoing embodiments described with reference to FIG. 5 to FIG. 7. It may be understood that a transmission failure may occur in 920. Optionally, the second transmission resource and/or the third transmission resource may be further used to transmit cached data of another destination address. For specific implementation, refer to the foregoing embodiment described with reference to FIG. 8.

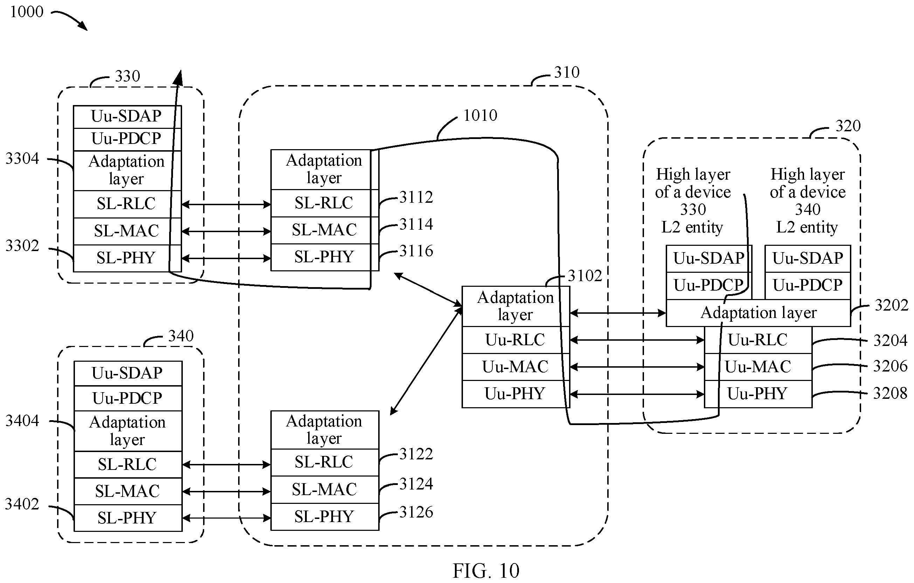

FIG. 10 is a schematic of a protocol stack 1000 related to transmission of multiplexed data according to some embodiments of this disclosure. In an example in FIG. 10, the second device 320 is a network device, and remote devices include a third device 330 and a fourth device 340. It should be understood that, on this basis, a person skilled in the art may similarly determine a protocol stack in a scenario in which the second device 320 is a terminal device, and may similarly determine a protocol stack in which more or fewer remote devices are included. For brevity, details are not described herein again.

As shown in FIG. 10, there are end-to-end bearer configurations and end-to-end SDAP and PDCP entities, for example, a Uu-SDAP and a Uu-PDCP shown in the figure, between the second device 320 and the third device 330 and between the second device 320 and the fourth device 340.

Data for the third device 330 and data for the fourth device 340 are respectively transmitted to an adaptation layer 3202 of the second device 320 through a SDAP (Uu-SDAP) and a PDCP (Uu-PDCP). The adaptation layer 3202 of the second device 320 may add an ID of a remote device and a DRB ID to corresponding data. Specifically, an ID of the third device 330 and an ID of a DRB of the third device are added to the data for the third device 330, and an ID of the fourth device 340 and an ID of a DRB of the fourth device are added to the data for the fourth device 340.

Then, the adaptation layer 3202 of the second device 320 may deliver, to a lower-layer protocol layer, the data to which the ID of the remote device and the DRB ID are added, and multiplex the data on an RLC bearer (Uu-RLC 3204). Then, the second device 320 may deliver the multiplexed data to a MAC layer (Uu-MAC 3206), and send the multiplexed data to a first device 310 through a physical layer (Uu-PHY 3208).

After receiving the multiplexed data from the second device 320, a physical layer (Uu-PHY) of the first device 310 may deliver the multiplexed data to an adaptation layer 3102 layer by layer through a MAC layer (Uu-MAC) and an RLC layer (Uu-RLC). After receiving the multiplexed data of the Uu-RLC bearer from the second device 320, the adaptation layer 3102 of the first device 310 may determine, based on the ID of the remote device and the DRB ID in the data, a PC5 connection corresponding to the data, that is, a PC5 connection between the first device 310 and the third device 330 and a PC5 connection between the first device 310 and the fourth device 340.

Further, the first device 310 may transfer corresponding data in the multiplexing data to an RLC bearer of a correct remote device based on a mapping relationship or a correspondence between the RLC bearer, the ID of the remote device, and the DRB ID that are configured by the network device. Specifically, the data for the third device 330 is sent to the third device 330, and the data for the fourth device 340 is sent to the fourth device 340.

The adaptation layer 3102 of the first device 310 may deliver first partial data to a SL-side protocol stack (SL-RLC 3112). A MAC entity (SL-MAC 3114) of the first device 310 may perform logical channel packet assembly based on a second transmission resource, that is, may receive data from different logical channels based on priorities of the logical channels and form a first MAC PDU. The first MAC PDU may be delivered by the MAC entity (SL-MAC 3114) of the first device 310 to a physical layer (SL-PHY 3116), and sent to the third device 330, that is, a physical layer (SL-PHY 3302) of the third device 330. Alternatively, optionally, similar to the foregoing descriptions with reference to part 420 in FIG. 4, a dedicated logical channel may be configured for data of the third device 430. In this way, when the second transmission resource is used for packet assembly, data may be received from the logical channel configured for the third device 430, and packet assembly may be performed, to ensure that the second transmission resource is dedicated to transmission of the data of the third device 430.

The adaptation layer 3102 of the first device 310 may deliver second partial data to the SL-side protocol stack (SL-RLC 3122). The MAC entity (SL-MAC 3124) of the first device 310 may perform logical channel packet assembly based on a third transmission resource, that is, may receive data from different logical channels based on the priorities of the logical channels and form a second MAC PDU. The second MAC PDU may be delivered by the MAC entity (SL-MAC 3124) of the first device 310 to the physical layer. (SL-PHY 3126), and sent to the fourth device 340, that is, a physical layer (SL-PHY 3402) of the fourth device 340. Alternatively, optionally, similar to the foregoing descriptions with reference to part 420 in FIG. 4, a dedicated logical channel may be configured for data of the fourth device 440. In this way, when the third transmission resource is used for packet assembly, data may be received from the logical channel configured for the fourth device 440, and packet assembly may be performed, to ensure that the third transmission resource is dedicated to transmission of the data of the fourth device 440.

An adaptation layer 3304 of the third device 330 and an adaptation layer 3404 of the fourth device 340 may respectively deliver the received data, based on the DRB ID in the data, to a correct Uu-PDCP entity and a correct Uu-SDAP entity.

FIG. 10 further shows a transmission path 1010 of the data for the third device 330 from the second device 320 to the third device 330. It may be understood that a transmission path (not shown in FIG. 10) of the data for the fourth device 340 is similar.

In this way, the second device 320 may pre-schedule transmission resources of a plurality of links related to to-be-transmitted data. In this way, after receiving the data to be sent to the remote devices, the relay device (that is, the first device 310) may avoid performing resource scheduling request again, and directly use the pre-scheduled resources for forwarding. In this way, signaling overheads can be reduced, and waiting duration of the transmission data at the relay device can be reduced or even avoided. This reduces a data transmission delay and power consumption of the device.

It should be understood that, in embodiments of this disclosure, "first", "second", "third", and the like are only intended to indicate that a plurality of objects may be different, but two objects may be the same. "First", "second", "third", and the like should not be construed as any limitation on embodiments of this disclosure.

It should be further understood that division into the manners, cases, categories, and embodiments in embodiments of this application is only intended for ease of description, and should not constitute a particular limitation. The features in the manners, categories, cases, and embodiments may be combined with each other if logical.

It should be further understood that, the foregoing content is only intended to help a person skilled in the art better understand embodiments of this application, instead of limiting the scope of embodiments of this application. A person skilled in the art may make various modifications, variations, combinations, or the like based on the foregoing content. A modified, changed, or combined solution also falls within the scope of embodiments of this application.

It should be further understood that the foregoing content descriptions focus on differences between embodiments. For same or similar parts, refer to each other. For brevity, details are not described herein again.

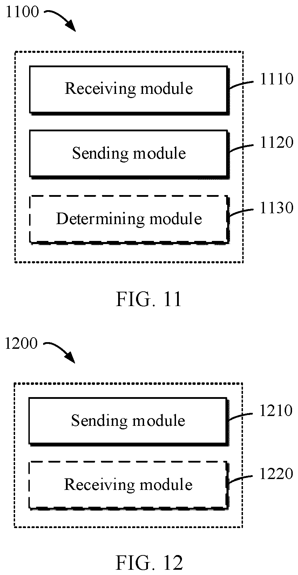

FIG. 11 is a block schematic of a communication apparatus 1100 for data transmission according to some embodiments of this disclosure. The apparatus 1100 may be implemented as a first device 310 shown in FIG. 3, or may be implemented as a part (for example, a chip) of the first device 310, or the like. This is not limited in this disclosure.

As shown in FIG. 11, the apparatus 1100 includes a receiving module 1110 and a sending module 1120. The receiving module 1110 is configured to receive first scheduling indication information and second scheduling indication information from a second device, where the first scheduling indication information indicates a first transmission resource from the second device to the communication apparatus 1100, and the second scheduling indication information indicates a second transmission resource from the communication apparatus 1100 to a third device. The receiving module 1110 is further configured to receive transmission data from the second device on the first transmission resource. The sending module 1120 is configured to send the transmission data to the third device on the second transmission resource when the transmission data is successfully received by the communication apparatus 1100.

For example, types of the communication apparatus 1100 and the third device are terminal devices, and there is a PC5 interface between the communication apparatus 1100 and the third device.

Optionally, a type of the second device is a terminal device, and there is a PC5 interface between the communication apparatus 1100 and the second device. Alternatively, optionally, a type of the second device is a network device, and there is a Uu interface between the communication apparatus 1100 and the second device.

In some embodiments, the receiving module 1110 may be further configured to receive first feedback information from the third device, where the first feedback information indicates whether the third device successfully receives the transmission data. The sending module 1120 may be further configured to send first joint feedback information to the second device, where the first joint feedback information includes the first feedback information and second feedback information, and the second feedback information indicates that the communication apparatus 1100 successfully receives the transmission data.

Optionally, the first scheduling indication information and the second scheduling indication information may be carried in same control signaling. Optionally, the first scheduling indication information and the second scheduling indication information may be carried in different control signaling. The first scheduling indication information is carried in first control signaling, the first control signaling includes a first identifier, the second scheduling indication information is carried in second control signaling, and the second control signaling includes a second identifier associated with the first identifier.

When the transmission data is not successfully received by the communication apparatus 1100, the sending module 1120 may be further configured to send second joint feedback information to the second device, where the second joint feedback information includes third feedback information and fourth feedback information, the third feedback information indicates that the communication apparatus 1100 fails to receive the transmission data, and the fourth feedback information indicates that the third device fails to receive the transmission data.

When the transmission data fails to be received by the communication apparatus 1100, the sending module 1120 may be further configured to send third feedback information to the second device, where the third feedback information indicates that the communication apparatus 1100 fails to receive the transmission data. The sending module 1120 may be further configured to send fourth feedback information to the second device, where the fourth feedback information indicates that the third device fails to receive the transmission data.

As shown in FIG. 11, the apparatus 1100 may further include a determining module 1130, configured to determine a destination address based on cached data of the communication apparatus 1100, where the destination address corresponds to a destination device. The sending module 1120 may be further configured to send, to the destination device on the second transmission resource, data that is in the cached data and that corresponds to the destination address.

The apparatus 1100 in FIG. 11 can be configured to implement the processes described by the first device 310 with reference to FIG. 4 to FIG. 9. For brevity, details are not described herein again.

FIG. 12 is a block schematic of a communication apparatus 1200 for data transmission according to some embodiments of this disclosure. The apparatus 1200 may be implemented as a second device 320 shown in FIG. 3, or may be implemented as a part (for example, a chip) of the second device 320, or the like. This is not limited in this disclosure.

As shown in FIG. 12, the apparatus 1200 includes a sending module 1210 and a receiving module 1220. The sending module 1210 is configured to send first scheduling indication information and second scheduling indication information to a first device, where the first scheduling indication information indicates a first transmission resource from the communication apparatus 1200 to the first device, and the second scheduling indication information indicates a second transmission resource from the first device to a third device. The sending module 1210 is further configured to send transmission data to the first device on the first transmission resource, so that the first device sends the transmission data to the third device on the second transmission resource.

For example, types of the first device and the third device are terminal devices, and there is a PC5 interface between the first device and the third device.

Optionally, a type of the communication apparatus 1200 is a terminal device, and there is a PC5 interface between the communication apparatus 1200 and the first device. Alternatively, optionally, a type of the communication apparatus 1200 is a network device, and there is a Uu interface between the communication apparatus 1200 and the first device.

In some embodiments, the receiving module 1220 is configured to receive joint feedback information from the first device, where the joint feedback information includes first feedback information and second feedback information, the first feedback information indicates whether the third device successfully receives the transmission data, and the second feedback information indicates whether the first device successfully receives the transmission data.

Optionally, the first scheduling indication information and the second scheduling indication information may be carried in same control signaling. Optionally, the first scheduling indication information and the second scheduling indication information may be carried in different control signaling. The first scheduling indication information is carried in first control signaling, the first control signaling includes a first identifier, the second scheduling indication information is carried in second control signaling, and the second control signaling includes a second identifier associated with the first identifier.

In some embodiments, the receiving module 1220 may be further configured to receive third feedback information from the first device, where the third feedback information indicates that the first device fails to receive the transmission data. Optionally, the receiving module 1220 may be further configured to receive fourth feedback information from the first device, where the fourth feedback information indicates that the second transmission resource is used to transmit cached data of a destination address and indicates whether a destination device corresponding to the destination address successfully receives the cached data.

The apparatus 1200 in FIG. 12 can be configured to implement the processes described by the second device 320 with reference to FIG. 4 to FIG. 9. For brevity, details are not described herein again.

Module or unit division in this embodiment of this disclosure is an example, and is merely logical function division. In actual implementation, there may be another division manner. In addition, functional units in the disclosed embodiments may be integrated into one unit, or may exist alone physically, or two or more units are integrated into one unit. The integrated unit may be implemented in a form of hardware, or may be implemented in a form of a software functional unit.

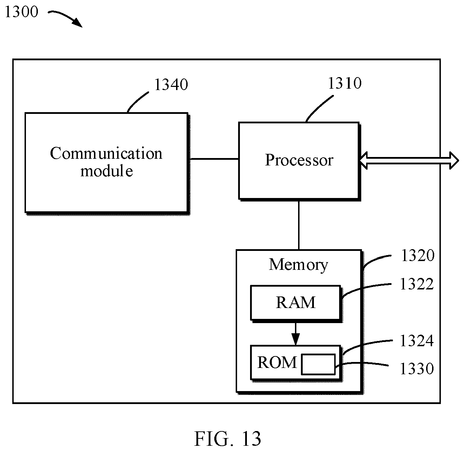

FIG. 13 is a block schematic of an example device 1300 that may be used to implement an embodiment of this disclosure. The device 1300 may be implemented or included in a first device 310 or a second device 320 in FIG. 3. As shown in the figure, the device 1300 includes one or more processors 1310, one or more memories 1320 coupled to the processor 1310, and a communication module 1340 coupled to the processor 1310.

The communication module 1340 may be configured to perform bidirectional communication. The communication module 1340 may have at least one communication interface used for communication. The communication interface may include any interface necessary for communicating with another device.

The processor 1310 may be any type suitable for a local technology network, and may include but is not limited to at least one of the following: a general-purpose computer, a dedicated computer, a microcontroller, a digital signal processor (Digital Signal Processor, DSP), or a controller-based multi-core controller architecture. The device 1300 may have a plurality of processors, such as an application-specific integrated circuit chip, which in time belongs to a clock synchronized with a main processor.

The memory 1320 may include one or more non-volatile memories and one or more volatile memories. An example of the non-volatile memory includes but is not limited to at least one of the following: a read-only memory (Read-Only Memory, ROM) 1324, an erasable programmable read-only memory (Erasable Programmable Read-Only Memory, EPROM), a flash memory, a hard disk, a compact disc (Compact Disc, CD), a digital versatile disk (Digital Versatile Disc, DVD), or another magnetic storage and/or optical storage. An example of the volatile memory includes but is not limited to at least one of the following: a random access memory (Random Access Memory, RAM) 1322, or another volatile memory that does not persist during power outage duration.

A computer program 1330 includes computer-executable instructions performed by an associated processor 1310. The program 1330 may be stored in the ROM 1324. The processor 1310 may perform any suitable action and processing by loading the program 1330 into the RAM 1322.

This embodiment of this disclosure may be implemented by using the program 1330, so that the device 1300 may perform any process discussed with reference to FIG. 4 to FIG. 9. This embodiment of this disclosure may alternatively be implemented by using hardware or a combination of software and hardware.

The program 1330 may be tangibly included in a computer-readable medium, and the computer-readable medium may be included in the device 1300 (for example, in the memory 1320) or another storage device that may be accessed by the device 1300. The program 1330 may be loaded from the computer-readable medium to the RAM 1322 for execution. The computer-readable medium may include any type of tangible nonvolatile memory, for example, a ROM, an EPROM, a flash memory, a hard disk, a CD, or a DVD.

In some embodiments, the communication module 1340 in the device 1300 may be implemented as a transmitter and a receiver (or a transceiver). The communication module 1340 may be configured to send/receive data such as first scheduling indication information, second scheduling indication information, and transmission data. In addition, the device 1300 may further include one or more of a scheduler, a controller, and a radio frequency/an antenna. Details are not described in this disclosure.

For example, the device 1300 in FIG. 13 may be implemented as an electronic device, or may be implemented as a chip or a chip system in the electronic device. This is not limited in this embodiment of this disclosure.

An embodiment of this disclosure further provides a chip. The chip may include an input interface, an output interface, and a processing circuit. In this embodiment of this disclosure, the input interface and the output interface may complete signaling or data exchange, and the processing circuit may complete generation and processing of signaling or data information.

An embodiment of this disclosure further provides a chip system, including a processor, configured to support a computing device in implementing a function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include the chip and another discrete device.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block schematics, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual destination processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block schematics are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A data transmission method, comprising:
receiving, by a first device, first scheduling indication information and second scheduling indication information from a second device, wherein the first scheduling indication information indicates a first transmission resource from the second device to the first device, and the second scheduling indication information indicates a second transmission resource from the first device to a third device;
receiving, by the first device, transmission data from the second device on the first transmission resource; and
when the transmission data is successfully received by the first device, sending, by the first device, the transmission data to the third device on the second transmission resource.

2. The method according to claim 1, further comprising:
receiving, by the first device, first feedback information from the third device, wherein the first feedback information indicates whether the third device successfully receives the transmission data; and
sending, by the first device, first joint feedback information to the second device, wherein the first joint feedback information comprises the first feedback information and second feedback information, and the second feedback information indicates that the first device successfully receives the transmission data.

3. The method according to claim 1 or 2, wherein the first scheduling indication information and the second scheduling indication information are carried in same control signaling.

4. The method according to claim 1 or 2, wherein the first scheduling indication information is carried in first control signaling, the first control signaling comprises a first identifier, the second scheduling indication information is carried in second control signaling, and the second control signaling comprises a second identifier associated with the first identifier.

5. The method according to claim 1, further comprising:
when the transmission data is not successfully received by the first device, sending, by the first device, second joint feedback information to the second device, wherein the second joint feedback information comprises third feedback information and fourth feedback information, the third feedback information indicates that the first device fails to receive the transmission data, and the fourth feedback information indicates that the third device fails to receive the transmission data.

6. The method according to claim 1, further comprising:
when the transmission data is not successfully received by the first device, sending, by the first device, third feedback information to the second device, wherein the third feedback information indicates that the first device fails to receive the transmission data; and
sending, by the first device, fourth feedback information to the second device, wherein the fourth feedback information indicates that the third device fails to receive the transmission data.

7. The method according to claim 5 or 6, further comprising:
determining, by the first device, a destination address based on cached data of the first device, wherein the destination address corresponds to a destination device; and
sending, by the first device to the destination device on the second transmission resource, data that is in the cached data and that corresponds to the destination address.

8. The method according to any one of claims 1 to 7, wherein types of the first device and the third device are terminal devices, and there is a PC5 interface between the first device and the third device; and
a type of the second device is a terminal device, and there is a PC5 interface between the first device and the second device; or a type of the second device is a network device, and there is a Uu interface between the first device and the second device.

9. A data transmission method, comprising:
sending, by a second device, first scheduling indication information and second scheduling indication information to a first device, wherein the first scheduling indication information indicates a first transmission resource from the second device to the first device, and the second scheduling indication information indicates a second transmission resource from the first device to a third device; and
sending, by the second device, transmission data to the first device on the first transmission resource, so that the first device sends the transmission data to the third device on the second transmission resource.

10. The method according to claim 9, further comprising:
receiving, by the second device, joint feedback information from the first device, wherein the joint feedback information comprises first feedback information and second feedback information, the first feedback information indicates whether the third device successfully receives the transmission data, and the second feedback information indicates whether the first device successfully receives the transmission data.

11. The method according to claim 9, further comprising:
receiving, by the second device, third feedback information from the first device, wherein the third feedback information indicates that the first device fails to receive the transmission data; and
receiving, by the second device, fourth feedback information from the first device, wherein the fourth feedback information indicates that the second transmission resource is used to transmit cached data of a destination address and indicates whether a destination device corresponding to the destination address successfully receives the cached data.

12. The method according to any one of claims 9 to 11, wherein the first scheduling indication information and the second scheduling indication information are carried in same control signaling.

13. The method according to any one of claims 9 to 11, wherein the first scheduling indication information is carried in first control signaling, the first control signaling comprises a first identifier, the second scheduling indication information is carried in second control signaling, and the second control signaling comprises a second identifier associated with the first identifier.

14. The method according to any one of claims 9 to 13, wherein types of the first device and the third device are terminal devices, and there is a PC5 interface between the first device and the third device; and
a type of the second device is a terminal device, and there is a PC5 interface between the first device and the second device; or a type of the second device is a network device, and there is a Uu interface between the first device and the second device.

15. A communication apparatus, comprising:
a receiving module, configured to receive first scheduling indication information and second scheduling indication information from a second device, wherein the first scheduling indication information indicates a first transmission resource from the second device to the communication apparatus, and the second scheduling indication information indicates a second transmission resource from the communication apparatus to a third device, wherein
the receiving module is further configured to receive transmission data from the second device on the first transmission resource; and
a sending module, configured to: when the transmission data is successfully received by the communication apparatus, send the transmission data to the third device on the second transmission resource.

16. A communication apparatus, comprising:
a sending module, configured to send first scheduling indication information and second scheduling indication information to a first device, wherein the first scheduling indication information indicates a first transmission resource from the communication apparatus to the first device, and the second scheduling indication information indicates a second transmission resource from the first device to a third device, wherein
the sending module is further configured to send transmission data to the first device on the first transmission resource, so that the first device sends the transmission data to the third device on the second transmission resource.

17. A communication apparatus, comprising a transceiver, a processor, and a memory, wherein the memory stores instructions executed by the processor, and when the instructions are executed by the processor, the communication apparatus is enabled to implement the method according to any one of claims 1 to 14.

18. A computer-readable storage medium, wherein the computer-readable storage medium stores computer-executable instructions, and when the computer-executable instructions are executed by a processor, the method according to any one of claims 1 to 14 is implemented.

19. A computer program product, wherein the computer program product comprises computer-executable instructions, and when the computer-executable instructions are executed, the method according to any one of claims 1 to 14 is implemented.

20. A chip, comprising a processing circuit, configured to perform the method according to any one of claims 1 to 14.
